Europäisches Patentamt

European Patent Office

Office européen des brevets

(11) Veröffentlichungsnummer: **0 514 745 A2**

## EUROPÄISCHE PATENTANMELDUNG

(21) Anmeldenummer: **92108002.4**

(51) Int. Cl.5: **G02B 3/00**

(22) Anmeldetag: **12.05.92**

(30) Priorität: **21.05.91 DE 4116545**

(43) Veröffentlichungstag der Anmeldung:
**25.11.92 Patentblatt 92/48**

(84) Benannte Vertragsstaaten:
**DE FR GB IT NL**

(71) Anmelder: **SIEMENS AKTIENGESELLSCHAFT
Wittelsbacherplatz 2
W-8000 München 2(DE)**

(72) Erfinder: **Plies, Erich, Dr.
Firlestrasse 15
W-8000 München 83(DE)**

(54) **Objektivlinse zur Erzeugung eines Strahlungsfokus im Innern einer Probe.**

(57) Viele Lasermeßverfahren zur Abtastung der Ladungsträgerdichte oder der Potentialverteilung im Innern eines Bauelements (IC) der Mikroelektronik basieren auf der sogenannten "backside-probing"-Technik, bei der die Laserstrahlung (LA) mit Hilfe eines konventionellen Mikroskopobjektivs von der Bauelementrückseite in die Ebene der spannungsführenden Komponenten (SK) fokussiert wird. Da die Bestrahlung durch das Substrat (SU) erfolgt, entsteht eine große sphärische Aberration, die die Ortsauflösung auf etwa 2 bis 4 $\mu$m begrenzt. Zur Erzeugung einer Sub-$\mu$-Sonde im Substrat (SU) wird vorgeschlagen, eine aus einer Silizium-Grundplatte (GP, Brechungsindex $n_1$), einer in einer Aussparung der Grundplatte (GP) liegenden Kugel (KU, Brechungsindex $n_2 <$ $n_1$, Radius $r_2$) und einer Silizium-Halbkugelschale (KS, Brechungsindex $n_1$, Außenradius $r_1$, Innenradius $r_2$) bestehende Linse auf der polierten Rückseite (RS) des Bauelements (IC) anzuordnen. Bei geeigneter Wahl der Brechungsidizes und der Radien bilden die Linse und das Substrat (SU) eine als Zwei-Index-Luneburg-Linse wirkende optische Einheit, die ein einfallendes Parallelstrahlenbündel (LA) in einen im Innern des Substrats (SU) liegenden Punkt (LF) fokussiert.

Aus IBM J. Res. Develop. Vol. 34, Nr. 2/3 (1990) S. 162-172 ist ein Lasermeßverfahren zur Abtastung der Ladungsträgerdichte im Innern eines Bauelements der Mikroelektronik bekannt. Es basiert auf der sogenannten "backside-probing"-Technik, bei der man die Laserstrahlung mit Hilfe eines konventionellen Mikroskopobjektivs von der Bauelementrückseite in die Ebene der spannungsführenden Komponenten fokussiert. Da die Bestrahlung durch das etwa 0,4 mm dicke Substrat erfolgt, entsteht eine große sphärische Aberration, die die Ortsauflösung auf 2 bis 4 $\mu$m begrenzt. Es wurde daher vorgeschlagen, die sphärische Aberration durch Abschleifen des Substrats soweit zu verringern, daß man auch mit einem konventionellen Mikroskopobjektiv bei einer Wellenlänge $\lambda$ = 1,3 $\mu$m eine im Submikrometerbereich liegende Ortsauflösung erreicht. Das Abschleifen des Substrats auf Bruchteile eines Millimeters gefährdet allerdings die mechanische Stabilität des Bauelements. Außerdem ist nicht sichergestellt, daß diese Art der Präparation keinen Einfluß auf die elektrische Funktionsfähigkeit des Bauelements hat.

Die sogenannte Luneburg-Linse gehört zur Klasse der absoluten optischen Instrumente mit perfekter geometrisch-optischer Abbildung. Sie besteht aus einer inhomogenen Kugel mit dem Radius R, deren Brechungsindex n eine Funktion des Abstands r vom Mittelpunkt der Kugel ist. Gehorcht n der Beziehung n (r) = = $(2 - r^2/R^2)^{1/2}$, dann wird jedes aus einer beliebigen Raumrichtung einfallende Parallelstrahlenbündel in einem idealen Fokus auf der Kugeloberfläche vereinigt. In der Mikrowellentechnik dient die Luneburg-Linse als Antenne, wobei diese dann aus mehreren dielektrischen Kugelschalen mit unterschiedlichen aber jeweils konstanten Brechungsindizes besteht.

Eine lediglich aus einer inneren Kugel und einer äußeren Kugelschale bestehende Luneburg-Linse ist aus J. Appl. Phys. 32 (1961) S. 2051 und R.C. Hansen ed.: "Microwave Scanning Antennas", Academic Press, New York (1965) S. 214-218 bekannt. Diese Linse besitzt eine sehr kleine sphärische Aberration mit geringen Zonenfehlern, so daß sie bis zu einer Einfallshöhe h = 0,95 $r_1$ ($r_1$: = Radius der äußeren Kugel) nutzbar ist.

Der Erfindung liegt die Aufgabe zugrunde, eine eine geringe sphärische Aberration aufweisende Objektivlinse zur Erzeugung eines Strahlungsfokus im Innern einer Probe anzugeben. Diese Aufgabe wird durch eine Objektivlinse mit den in Patentanspruch 1 angegebenen Merkmalen gelöst.

Der mit der Erfindung erzielbare Vorteil besteht insbesondere darin, daß sich die Ladungsträgerdichte und die Potentialverteilung in einem Bauelement der Mikroelektronik mit einer im Submikrometerbereich liegenden Ortsauflösung abtasten lassen.

Die abhängigen Ansprüche betreffen vorteilhafte Weiterbildungen der im folgenden anhand der Zeichnung erläuterten Erfindung. Hierbei zeigt die Figur ein Ausführungsbeispiel einer erfindungsgemäßen Objektivlinse.

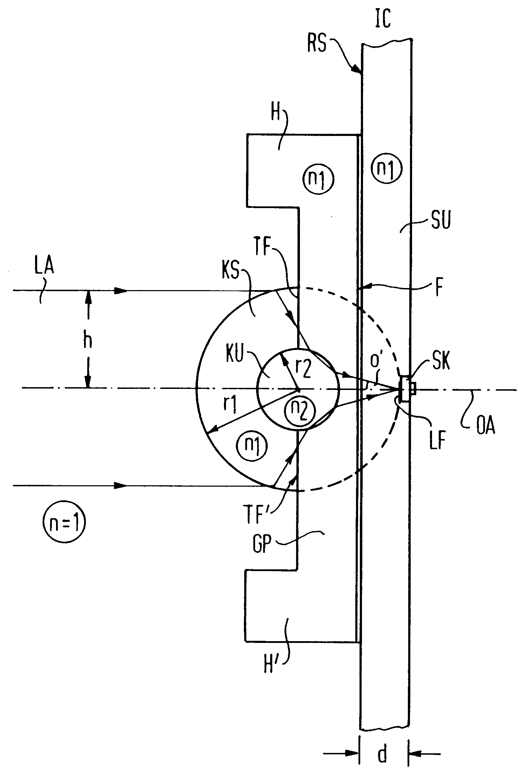

Die in Fig. 1 schematisch dargestellte Objektivlinse hat die Aufgabe, ein entlang der optischen Achse OA einfallendes Parallelstrahlenbündel LA in die Ebene der spannungsführenden Komponenten SK eines Bauelements IC der Mikroelektronik abzubilden. Sie ist auf der optisch planpolierten Rückseite RS des Siliziumsubstrats SU (Brechungsindex $n_1$ = 3,5) angeordnet, wobei der zwischen der Linse und dem Substrat SU vorhandene Ölfilm F eine reibungarme Verschiebung des Bauelements IC in einer senkrecht zur optischen Achse OA orientierten Ebene gewährleistet. Außerdem trägt der Ölfilm F zur Verbesserung der Abbildungsqualität bei, da dieser einen geringeren Strahlversatz bewirkt als ein zwischen der Linse und dem Substrat SU vorhandener Luftspalt. Die Objektivlinse besteht aus einer mit Halterungselementen H, H' ausgestatteten Silizium-Grundplatte (Brechungsindex $n_1$ = 3,5), einer in der halbkugelförmigen Aussparung der Grundplatte GP angeordneten Kugel KU (Brechungsindex $n_2$ < $n_1$) mit Radius $r_2$ und einer Silizium-Halbkugelschale KS (Brechungsindex $n_1$, äußerer Radius $r_1$, innerer Radius $r_2$), die auf der Kugel KU angeordnet und an den Trennflächen TF, TF' mit der Grundplatte GP verkittet ist. Bei geeigneter Wahl des Brechungsindex $n_2$ und der Radien $r_1$ bzw. $r_2$ bilden die Halbkugelschale KS, die Kugel KU, die Grundplatte GP und das Siliziumsubstrat SU eine als 2-Index-Luneburg-Linse wirkende optische Einheit, die das einfallende Parallelstrahlenbündel LA in einen auf der gestrichelt dargestellten Kugelschale liegenden Punkt LF fokussiert. Eine bis zur Einfallshöhe h $\leq$0,95 $r_1$ sphärisch korrigierte Linse erhält man insbesondere dann, wenn das Kugelmaterial einen Brechungsindex von $n_2$ = 2,71 aufweist und das Verhältnis der Radien $r_2/r_1$ = 0,39 beträgt.

Das Bauelement kann bezüglich der Dicke d des Substrats SU unverändert bleiben, sofern d der Bedingung

$$d < r_1 - r_2 \qquad 1)$$

genügt. Dies läßt sich für gängige Substratdicken von d $\geq$ 0,4 mm leicht erfüllen. Es ist lediglich eine Politur der Rückseite RS des Bauelements IC erforderlich, um einen gleichmäßigen Kontakt zwischen der Objektivlinse und dem Substrat SU zu gewährleisten.

Die mit der Objektivlinse erreichbare Ortsauflösung $\delta$ berechnet sich zu

$$\delta = 0{,}61 \; \lambda/NA \qquad 2)$$

mit

$$NA = n_1 \cdot \sin \sigma' \cdot \qquad 3)$$

Hierbei bezeichnet $\lambda$ die Vakuum-Wellenlänge der einfallenden Strahlung LA und $\sigma'$ den halben Öffnungswinkel des Strahlenbündels im Substrat SU. Da die Objektivlinse eine numerische Apperatur von $NA = n_1 \sin\sigma' = 0{,}96$ aufweist, vereinfacht sich Gleichung 1) zu $\delta = 0{,}64 \; \lambda$ , so daß man für $\lambda = 1{,}3 \; \mu m$ (Infrarotstrahlung) eine Ortsauflösung von $\delta = 0{,}83 \; \mu m$ erhält.

In die Ortsauflösung gehen die absoluten Werte von $r_1$ und $r_2$ nicht ein. Trotzdem ist eine Beschränkung der Kugelradien auf Werte $r_1 < 4$ mm bzw. $r_2 < 1{,}56$ mm erforderlich, um die restlichen Zonenfehler der Linse ausreichend klein zu halten. Kugeln mit einem Radius $r_2 < 1{,}56$ mm lassen sich in optischer Qualität maschinell herstellen. Sie werden beispielsweise als Halbkugel-Frontlinsen in apochromatischen Mikroskopobjektiven eingesetzt. Als Kugelmaterial kommen insbesondere Arsen-Triselenid-Glas, Tellurid-Glas, CdTe oder $As_{35}S_{10}Se_{35}Te_{20}$ in Betracht, da deren Brechungsindexes für Infrarotstrahlung der Wellenlänge $\lambda = 1{,}3 \; \mu m$ im Bereich von $n_2 \approx 2{,}7$ liegen.

Bei der Herstellung der aus Silizium bestehenden Linsenteile (Halbkugelschale KS, Grundplatte GP mit halbkugelförmiger Aussparung) kommen insbesondere die aus der Mikromechanik bekannten Techniken zur Anwendung. Die Linsenteile sollten spannungsfrei gefertigt sein, um keine störende Doppelbrechung zu verursachen.

## Patentansprüche

1. Objektivlinse zur Erzeugung eines Strahlungsfokus im Innern einer Probe
   **gekennzeichnet durch**
   - eine auf einer ebenen Fläche (RS) der Probe (IC) angeordnete Platte (GP), wobei die Platte (GP) aus einem einen ersten Brechungsindex ($n_1$) aufweisenden ersten Material besteht und mit einer halbkugelförmigen Aussparung mit Radius $r_2$ versehen ist,
   - eine in der Aussparung angeordnete Kugel (KU) mit Radius $r_2$, wobei die Kugel (KU) aus einem einen zweiten Brechungsindex ($n_2$) aufweisenden zweiten Material besteht und der zweite Brechungsindex ($n_2$) kleiner ist als der erste Brechungsindex ($n_1$)
   - und eine aus dem ersten Material bestehenden Halbkugelschale (KS), die einen äußeren Radius $r_1$ und einen inneren Radius $r_2$ aufweist und auf der Platte (GP) und der Kugel (KU) angeordnet ist.

2. Objektivlinse nach Anspruch 1,
   **dadurch gekennzeichnet,**
   daß die Radien $r_1$ und $r_2$ der Bedingung $r_1 - r_2 > d$ genügen, wobei d die in Richtung eines auf die Halbkugelschale (KS) einfallenden Parallelstrahlenbündels (LA) gemessene Dicke der Probe (IC) bezeichnet.

3. Objektivlinse nach Anspruch 1 oder 2,
   **dadurch gekennzeichnet,**
   daß die Probe (IC), die Platte (GP) und die Halbkugelschale (KS) aus demselben Material bestehen.

4. Objektivlinse nach einem der Ansprüche 1 bis 3,
   **dadurch gekennzeichnet,**
   daß die Halbkugelschale (KS) mit der Platte (GP) verkittet ist.

5. Objektivlinse nach einem der Ansprüche 1 bis 4,
   **dadurch gekennzeichnet,**
   daß die Platte (GP) verschiebbar auf der Probe (IC) angeordnet ist.

6. Objektivlinse nach Anspruch 5,

**dadurch gekennzeichnet,**
daß ein Ölfilm (F) zwischen der Platte (GP) und der ebenen Fläche (RS) vorhanden ist.

7. Objektivlinse nach einem der Ansprüche 1 bis 6,
**dadurch gekennzeichnet,**
daß die Platte (GP), die Halbkugelschale (KS) und die Probe (IC) aus Silizium bestehen.

8. Objektivlinse nach Anspruch 7,
**dadurch gekennzeichnet,**
daß das zweite Material einen Brechungsindex von annähernd $n_2 = 2,7$ aufweist.

9. Objektivlinse nach Anspruch 7 oder 8,
**dadurch gekennzeichnet,**
daß die Kugel (KU) aus Arsen-Triselenid-Glas, Tellurid-Glas, CdTe oder $As_{35}S_{10}Se_{35}Te_{20}$ besteht.

10. Objektivlinse nach einem der Ansprüche 1 bis 9,
**dadurch gekennzeichnet,**
daß die Platte (GP) mit Halterungselementen (H, H') versehen ist.